# EUROPÄISCHE PATENTSCHRIFT

(11) **EP 0 843 844 B1**
(45) Veröffentlichungstag und Bekanntmachung des Hinweises auf die Patenterteilung: **07.04.1999**
(21) Anmeldenummer: 96925647.8
(22) Anmeldetag: 05.08.1996
(51) Int. Cl.: G05B 23/02

(54) **VERFAHREN ZUR ANALYSE VON PROZESSIGNALEN EINER TECHNISCHEN ANLAGE, INSBESONDERE EINER KRAFTWERKSANLAGE**
METHOD OF ANALYSING PROCESS SIGNALS IN A TECHNICAL INSTALLATION, ESPECIALLY A POWER STATION
PROCEDE POUR L'ANALYSE DE SIGNAUX DE PROCESSUS DANS UNE INSTALLATION INDUSTRIELLE, NOTAMMENT DANS UNE CENTRALE ELECTRIQUE

(30) Priorität: 09.08.1995 DE 19529301
(43) Veröffentlichungstag der Anmeldung: 27.05.1998
(73) Patentinhaber: SIEMENS AKTIENGESELLSCHAFT, 80333 München (DE)
(72) Erfinder: FÜHRING, Thorsten, D-81739 München (DE); MEDERER, Hans-Gerd, D-91052 Erlangen (DE); PANYR, Jiri, D-81373 München (DE); POLITIADIS-BEHRENS, Alexander, D-91315 Höchstadt (DE); PREISER, Ulrich, D-81541 München (DE)
(86) Internationale Anmeldenummer: DE9601461
(87) Internationale Veröffentlichungsnummer: WO9706474

(56) Entgegenhaltungen:
- EP-A- 0 643 345
- WO-A-95/18420
- DE-A- 4 338 237
- DE-A- 4 436 658
- PATENT ABSTRACTS OF JAPAN vol. 018, no. 018 (P-1673), 12.Januar 1994 & JP,A,05 256741 (TOSHIBA CORP), 5.Oktober 1993,

## Beschreibung

Die Erfindung bezieht sich auf ein Verfahren zur Analyse von Prozeßsignalen einer technischen Anlage, insbesondere einer Kraftwerksanlage, deren Anlagenprozeß in Funktionseinheiten gegliedert ist.

In einer Leitwarte zur Steuerung einer Kraftwerksanlage fallen ständig große Mengen verschiedener Meßdaten an, die in ihrer Gesamtheit den Anlagen- oder Betriebszustand beschreiben. Das Bedienpersonal der Kraftwerksanlage steht vor der Aufgabe, die für den Betriebszustand jeweils relevanten Meßdaten oder Meßgrößen zu identifizieren und ihre Werte in Bezug auf den Zustand der Anlage zu verfolgen, zu analysieren und zu interpretieren. Dabei wird das Bedienpersonal üblicherweise von in der Leittechnik der Kraftwerksanlage vorgesehenen Informationsfiltern unterstützt, die archivierte oder ausschließlich für den aktuellen Anlagenzustand relevante Meßdaten oder Meßgrößen zu einer Anzeige bringen. Die überwiegende Menge der insgesamt erfaßten Meßdaten oder Meßgrößen wird üblicherweise lediglich elektronisch protokolliert.

Vorrangiges Ziel bei einer Analyse oder Interpretation dadurch entstandener Meßdatenprotokolle, insbesondere bei einer Systemdiagnose, ist die Ermittlung der Ursache für eine generierte Meldung. Insbesondere bei der Störungsanalyse muß vom Bedienpersonal geklärt werden, aufgrund welchen Fehlers ein Störungssignal auftrat. Dazu ist eine Signalrückverfolgung notwendig, bei der eine Kette von miteinander verknüpften Meldungsereignissen von der erhaltenen Störungsmeldung bis hin zu ihrer Ursache zurückverfolgt wird.

Aus der DE-A-44 36 658 sind eine Vorrichtung und ein Verfahren zur Ströungsuntersuchung bekannt, wobei zu Diagnosezwecken Korrelationen zwischen Ausgabesignalen von Sensoren erstellt werden.

Um eine derartige Signalrückverfolgung zu vereinfachen, ist der Anlagenprozeß einer Kraftwerksanlage üblicherweise in Funktionseinheiten gegliedert. Jede dieser Funktionseinheiten umfaßt dabei, analog zu einem Unterprogramm eines Computerprogramms, eine kleine Anzahl von miteinander logisch verknüpften Verfahrensschritten. Jeder Funktionseinheit kann dabei ein Funktionsplan zugeordnet sein, der in der Art eines Flußdiagramms den Datenfluß in einer Funktionseinheit repräsentiert. Für eine Signalrückverfolgung, beispielsweise bei einem Störfall, findet das Bedienpersonal dann anhand dieser Funktionspläne diejenige Meldungskette auf, die zu einer Störungsmeldung geführt hat. Dies ist jedoch mit einem hohen Aufwand und zudem mit hohen Anforderungen an das Bedienpersonal hinsichtlich eines enormen Zeitdrucks verbunden, da häufig kurzfristig Entscheidungen zur Einleitung von Gegenmaßnahmen getroffen werden müssen.

Der Erfindung liegt daher die Aufgabe zugrunde, ein Verfahren zur Analyse von Prozeßsignalen einer Kraftwerksanlage anzugeben, das eine zuverlässige und präzise Meldungsanalyse erlaubt. Dies soll so schnell geschehen, daß geeignete Gegenmaßnahmen im Bedarfsfall rechtzeitig ergriffen werden können, so daß lange Stillstände der Kraftwerksanlage und/oder Fehlerfortpflanzungen vermieden sind.

Diese Aufgabe wird für ein Verfahren zur Analyse von Prozeßsignalen einer Kraftwerksanlage, deren Anlagenprozeß in Funktionseinheiten gegliedert ist, erfindungsgemäß gelost,
- indem für jedes Prozeßsignal und jede Funktionseinheit geprüft wird, ob dieses Prozeßsignal Bestandteil dieser Funktionseinheit ist,
- indem für jeweils zwei Prozeßsignale der Grad ihrer Korrelation bestimmt wird anhand der Anzahl derjenigen Funktionseinheiten, in denen sie gemeinsam Bestandteil sind, und
- indem für ein vorgegebenes Prozeßsignal die mit diesem korrelierten Prozeßsignale als Informationselemente derart zueinander positioniert dargestellt werden, daß der Abstand zwischen jeweils zwei Informationselementen den Grad ihrer Korrelation repräsentiert, wobei die die am höchsten korrelierten Prozeßsignale repräsentierenden Informationselemente den geringsten Abstand zueinander aufweisen.

Die Erfindung geht dabei von der Überlegung aus, daß auf der Grundlage des mathematischen Modells der formalen Begriffsanalyse große Mengen von Prozeßsignalen nach dem Prinzip "kontextuelle Nähe entspricht räumlicher Nähe" hinsichtlich ihrer Bedeutung für den Betriebszustand der Kraftwerksanlage gefiltert, verdichtet und/oder strukturiert werden können.

Die Prozeßsignale werden dabei im Sinne der formalen Begriffsanalyse als Gegenstände interpretiert, denen als Merkmale die Funktionseinheiten nach dem Kriterium zugeordnet werden, ob ein Prozeßsignal Bestandteil einer Funktionseinheit ist oder nicht. Ein Prozeßsignal wird dabei als Bestandteil einer Funktionseinheit angesehen, wenn es in dieser Funktionseinheit verarbeitet wird, indem z.B. logische Operatoren auf dieses Prozeßsignal angewendet werden. Dazu gehört insbesondere auch, daß das Prozeßsignal der Funktionseinheit als Eingangsgröße zugeführt wird, daß das Prozeßsignal durch die Funktionseinheit generiert wird und somit als Ausgangsgröße bereitgestellt wird, oder daß das Prozeßsignal unverändert durch die Funktionseinheit hindurchgeschleust wird.

Nachdem in der Art einer Zuordnungstabelle für alle Prozeßsignale geprüft wurde, von welchen Funktionseinheiten sie Bestandteil sind und von welchen nicht, wird die kontextuelle oder auch inhaltliche Nähe von jeweils zwei Prozeßsignalen bestimmt. Dazu wird das Verhältnis der Anzahl der Funktionseinheiten, in denen die zwei Prozeßsignale gemeinsam Bestandteil sind, zur Anzahl derjenigen Funktionseinheiten, in denen mindestens eines der beiden Prozeßsignale Bestandteil ist, ermittelt. Mit anderen Worten: Jeweils zwei Prozeßsignale, die in allen Merkmalen übereinstimmen, weil sie Bestandteil der gleichen Funktionseinheiten sind, werden als einander inhaltlich besonders nahe klassifiziert, wogegen zwei Prozeßsignale, die in keinem Merkmal übereinstimmen, weil sie gemeinsam Bestandteil keiner Funktionseinheit sind, als einander inhaltlich nicht nahe klassifiziert werden.

Für eine grafische Darstellung wird für ein vorgegebenes Prozeßsignal die inhaltliche Nähe dieses Prozeßsignals zu anderen Prozeßsignalen in eine räumliche Nähe der die Prozeßsignale repräsentierenden Informationselemente transformiert. Das vorgegebene Prozeßsignal kann dabei beispielsweise eine Störungsmeldung sein. Durch die grafische Darstellung werden somit andere Prozeßsignale, die mit dem ausgewählten Prozeßsignal besonders stark korreliert sind, nahe zu diesem positioniert dargestellt, so daß für das Bedienpersonal besonders leicht erkennbar ist, welche Meßdaten oder Meßgrößen in Zusammenhang mit der Störmeldung generiert wurden. Auf diese Weise ist eine Signalrückverfolgung und somit eine Fehlerdiagnose besonders zuverlässig und effektiv möglich.

Für eine Diagnose des Anlagenzustands wird zweckmäßigerweise ein on-line erfaßtes Prozeßsignal vorgegeben. Zum Zwecke einer Rückverfolgung kann auch ein archiviertes on-line erfaßtes Prozeßsignal vorgegeben werden.Durch die somit mögliche schnelle Ermittlung der zu diesem on-line erfaßten Prozeßsignal korrelierten Prozeßsignale ist eine Ursachenerkennung für eine Fehlermeldung besonders effektiv durchführbar.

Für eine Prognose eines Anlagenzustandes wird zweckmäßigerweise ein simuliertes Prozeßsignal vorgegeben. Dadurch ist es möglich, die in der Art einer logischen Verkettung durch ein Prozeßsignal generierten weiteren Prozeßsignale zu verfolgen. Somit ist das Verhalten der Kraftwerksanlage besonders gut abschätzbar, planbar oder voraussehbar.

Um die Signalrückverfolgung besonders wirkungsvoll zu unterstützen, wird zweckmäßigerweise die zeitliche und/oder die logische Abfolge von Prozeßsignalen dargestellt. Dabei wird bei der Darstellung differenziert, ob ein erstes Prozeßsignal einem zweiten Prozeßsignal zeitlich und/oder logisch vorausgeht oder nachfolgt. Auf diese Weise ist eine Entwicklung des Anlagenzustands besonders leicht interpretierbar. Die Abfolge von Prozeßsignalen kann dabei beispielsweise durch einen Pfeil zwischen jeweils zwei Prozeßsignalen zugeordneten Informationselementen repräsentiert werden, wobei die Pfeilspitze in Richtung des das zeitlich bzw. logisch spätere Prozeßsignal repräsentierende Informationselementes weist.

Die generierte grafische Darstellung kann lediglich eine Ordnung von Prozeßsignale repräsentierenden Informationselementen sein. Vorzugsweise werden jedoch Informationselemente sowohl von Prozeßsignalen als auch von Funktionseinheiten anhand ihrer Korrelationen untereinander dargestellt. Zweckmäßigerweise werden zusätzlich Prozeßsignale miteinander verknüpfende Operatoren als Informationselemente dargestellt.

Der Informationsraum, in dem die Informationselemente dargestellt werden, ist n-dimensional, vorzugsweise dreidimensional. Daher werden zur Festlegung der Position jedes Informationselementes in diesem Informationsraum vorzugsweise drei räumliche Koordinaten ermittelt. Auf einem geeigneten Anzeigegerät in der Leitwarte, z.B. auf einem Bildschirm, wird daher vorteilhafterweise eine 3D-Darstellung gewählt.

Ein Ausführungsbeispiel der Erfindung wird anhand einer Zeichnung näher erläutert. Darin zeigen:
- Figur 1: Ein Funktionssschema mit zur Durchführung eines Analyseverfahrens für eine Kraftwerksanlage vorgesehenen Komponenten, und
- Figur 2: eine für einen Betriebszustand der Kraftwerksanlage charakteristische Anordnung von Prozeßsignale oder Funktionseinheiten repräsentierenden Informationselementen.

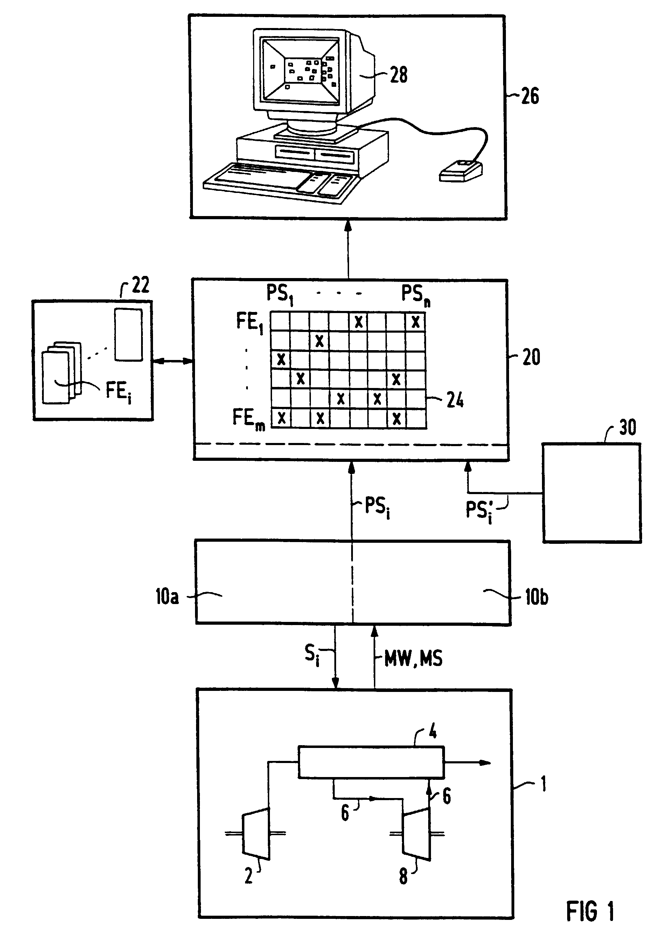

Als Kraftwerksanlage ist in Figur 1 schematisch eine Gas- und Dampfturbinenanlage 1 dargestellt. Diese umfaßt eine Gasturbine 2 und einen dieser rauchgasseitig nachgeschalteten Abhitzedampferzeuger 4, dessen Heizflächen in den Wasser-Dampf-Kreislauf 6 einer Dampfturbine 8 geschaltet sind.

Von (nicht dargestellten) Sensoren erfaßte Meßwerte MW sowie von (nicht dargestellten) Meldeelementen abgegebene Meldesignale MS werden einem Automatisierungssystem 10a und einem leittechnischen Informationssystem 10b zugeführt.

In Automatisierungseinheiten des Automatisierungs- und Informationssystems 10a, 10b der Gas- und Dampfturbinenanlage 1 werden die Meßwerte MW und die Meldesignale MS vorverarbeitet. Gegebenenfalls werden Steuersignale Sᵢ an Komponenten der Gas- und Dampfturbinenanlage 1 abgegeben. Die zusammenlaufenden Informationen über Messungs-, Regelungs- und Steuerungsereignisse sowie über die Signalerzeugung werden im Informationssystem 10b hinterlegt. Durch die innerhalb des Automatisierungs- und Informationssystems 10a, 10b ablaufenden Prozesse wird die Gas- und Dampfturbinenanlage 1 automatisch gesteuert und überwacht. Von dem Automatisierungs- und Informationssystem 10a, 10b werden anhand der on-line erfaßten Meßwerte MW und Meldesignale MS sowie der Steuersignale Sᵢ für den Anlagenprozeß relevante Prozeßsignale PSᵢ generiert. Diese werden an einen an das Automatisierungs- und Informationssystem 10a, 10b angeschlossenen Rechnerbaustein 20 übergeben.

Seiner Struktur nach ist der Anlagenprozeß der Gas- und Dampfturbinenanlage 1 in Funktionseinheiten FEᵢ gegliedert. Jede Funktionseinheit FEᵢ ist in der Art eines Flußdiagramms als Funktionsplan in einem mit dem Rechnerbaustein 20 verbundenen Speicherbaustein 22 hinterlegt.

Jede Funktionseinheit FEᵢ umfaßt dabei - in der Art einer Subroutine eines Computerprogramms - eine Anzahl von zur Ausführung einer Operation notwendigen technischen Verfahrensschritten. So umfaßt beispielsweise die Funktionseinheit "Notabschaltung der Pumpe" die Verfahrensschritte "Energiezufuhr der Pumpe abschalten", "Zu- und Ableitungen der Pumpe absperren" und "Reservepumpe aktivieren". Der Funktionseinheit FEᵢ wird dazu eine Anzahl der Prozeßsignale PSᵢ zugeführt. Diese Prozeßsignale PSᵢ werden in der Funktionseinheit FEᵢ bearbeitet und dabei modifiziert oder in andere Prozeßsignale PSᵢ umgewandelt. In der Funktionseinheit FEᵢ generierte Prozeßsignale PSᵢ werden von der Funktionseinheit FEᵢ als Ausgangsgrößen ausgegeben. Somit ist jedes Prozeßsignal PSᵢ Bestandteil einer Anzahl von Funktionseinheiten FEᵢ. Mit anderen Worten: Jedes Prozeßsignal PSᵢ ist Eingangsgröße für oder Ausgangsgröße von einer Anzahl von Funktionseinheiten FEᵢ. Ein Prozeßsignal PSᵢ kann aber auch unverändert durch die Funktionseinheit FEᵢ weitergegeben werden.

Auf Abruf werden die Funktionseinheiten FEᵢ dem Rechnerbaustein 20 zugeführt. Innerhalb des Rechnerbausteins 20 wird für jedes Prozeßsignal PSᵢ und für jede Funktionseinheit FEᵢ geprüft, ob dieses Prozeßsignal PSᵢ Bestandteil dieser Funktionseinheit FEᵢ ist. Dazu wird ein Kontext generiert, in dem in Form einer Matrix 24 eine eindeutige Zuordnung von Funktionseinheiten FEᵢ zu Prozeßsignalen PSᵢ durchgeführt wird. Diese Zuordnung ist im Sinne der formalen Begriffsanalyse als Zuweisung von Merkmalen zu Gegenständen zu verstehen.

Nach Vorgabe eines bestimmten Prozeßsignals PSᵢ werden anhand von im Kontext vorhandenen Informationen allen Prozeßsignalen PSᵢ vom Rechnerbaustein 20 räumliche Koordinaten zugeordnet. Dabei wird nach dem Prinzip "kontextuelle Nähe entspricht räumlicher Nähe" der Grad der Korrelation zwischen jeweils zwei Prozeßsignalen PSi bestimmt. Dazu wird das Verhältnis der Anzahl derjenigen Funktionseinheiten FEᵢ, in denen beide Prozeßsignale PSᵢ gemeinsam Bestandteil sind, zur Anzahl der Funktionseinheiten FEᵢ, in denen mindestens eines der beiden Prozeßsignale PSi Bestandteil ist, ermittelt. Aus diesem Verhältnis ergibt sich dann ein quantitatives Maß für den Grad der Korrelation zwischen diesen beiden Prozeßsignalen PSᵢ. Sind zum Beispiel beide Prozeßsignale PSᵢ ausschließlich Bestandteil derselben Funktionseinheiten FEᵢ, so sind die beiden Prozeßsignale PSᵢ hochgradig korreliert. Demgegenüber sind zwei Prozeßsignale PSᵢ nicht miteinander korreliert, wenn sie in keiner Funktionseinheit FEᵢ gemeinsamer Bestandteil sind. Dieses quantitative Maß der Korrelation zwischen zwei Prozeßsignalen PSᵢ wird in einen entsprechenden Abstand ihrer räumlichen Koordinaten zueinander transformiert.

Auf der Grundlage dieser räumlichen Zuordnung wird eine grafische Darstellung für die Prozeßsignale PSᵢ in einem Grafikmodul 26 erzeugt. Von dem Grafikmodul 26 werden zunächst Informationselemente Iᵢ(PSᵢ) für die mit dem vorgegebenen Prozeßsignal PSᵢ korrelierten Prozeßsignal PSᵢ generiert und anhand der räumlichen Koordinaten auf einer Anzeige 28 positioniert. Dabei ist für das Bedienpersonal bereits aus dem Abstand des Informationselements Iᵢ(PSᵢ) eines Prozeßsignals PSᵢ zu dem Informationselement Iᵢ(PSᵢ) des vorgegebenen Prozeßsignals PSᵢ erkennbar, inwieweit ein Prozeßsignal PSᵢ mit dem vorgegebenen Prozeßsignal PSᵢ korreliert ist. Dadurch wird deutlich gemacht, welche Bedeutung jedes Prozeßsignal PSᵢ für das vorgegebene Prozeßsignal PSᵢ hat. Wird z.B. als vorgegebenes Prozeßsignal PSᵢ eine Störungsmeldung gewählt, so ist für das Bedienpersonal leicht ersichtlich, welche Prozeßsignale PSᵢ für diese Störungsmeldung relevant sind. Somit ist eine Signalrückverfolgung zur Diagnose, insbesondere eine Analyse der Ursachen für die Störung, deutlich erleichtert.

Alternativ kann dem Rechnerbaustein 20 auch ein simuliertes Prozeßsignal PSᵢ' vorgegeben werden, das in einem mit dem Rechnerbaustein 20 verbundenen Simulatorbaustein 30 generiert wurde. In diesem Fall werden auf der Anzeige 28 die Informationselemente Iᵢ(PSᵢ) von denjenigen Prozeßsignalen PSᵢ dargestellt, die mit dem simulierten vorgegebenen Prozeßsignal PSi' korreliert sind. Somit ist es für das Bedienpersonal in der Art einer Prognose möglich, vorherzusagen, welches Prozeßsignal PSᵢ' zur Generierung welcher Prozeßsignale PSᵢ beitragen wird.

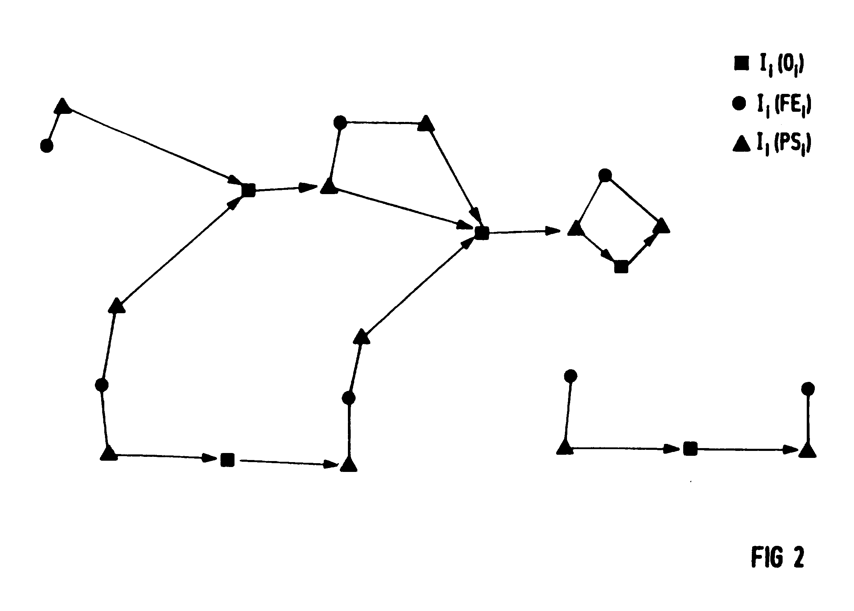

Auch können die den Prozeßsignalen PSᵢ zugeordneten Informationselemente Iᵢ(PSᵢ) gemeinsam mit Funktionseinheiten FEᵢ und/oder Prozeßsignale PSᵢ miteinander verknüpfenden Operatoren Oᵢ zugeordneten Informationselementen Iᵢ (FEᵢ) bzw. Iᵢ (Oᵢ) gemeinsam dargestellt sein. Dies zeigt Figur 2 in einer grafischen Darstellung eines Meßdatenprotokolls. Die zeitliche und/oder logische Abfolge von Prozeßsignalen PSᵢ ist dabei für jeweils zwei Prozeßsignale PSᵢ durch einen Pfeil zwischen den diesen zugeordneten Informationselementen Iᵢ (PSᵢ) dargestellt. Die Spitze des Pfeils weist in Richtung des dem zeitlich und/oder logisch späteren Prozeßsignal PSᵢ jeweils zugeordneten Informationselements Iᵢ(PSᵢ). Dadurch ist die der Meldefolge zugrundeliegende Verkettung der Prozeßsignale PSᵢ dargestellt.

## Patentansprüche

1. Verfahren zur Analyse von Prozeßsignalen einer technischen Anlage, insbesondere einer Kraftwerksanlage, deren Anlagenprozeß in Funktionseinheiten (FEᵢ) gegliedert ist,
- bei dem für jedes Prozeßsignal (PSᵢ) und jede Funktionseinheit (FEᵢ) geprüft wird, ob dieses Prozeßsignal (PSᵢ) Bestandteil dieser Funktionseinheit (FEᵢ) ist,
- bei dem für jeweils zwei Prozeßsignale (PSᵢ) der Grad ihrer Korrelation bestimmt wird anhand der Anzahl derjenigen Funktionseinheiten (FEᵢ), in denen sie gemeinsam Bestandteil sind, und
- bei dem für ein vorgegebenes Prozeßsignal (PSᵢ) die mit diesem korrelierten Prozeßsignale (PSᵢ) als Informationselemente (Iᵢ(PSᵢ)) derart zueinander positioniert dargestellt werden, daß der Abstand zwischen jeweils zwei Informationselementen (Iᵢ(PSᵢ)) den Grad ihrer Korrelation repräsentiert, wobei die die am höchsten korrelierten Prozeßsignale (Psi) repräsentierenden Informationselemente (I;(PSi)) den geringsten Abstand zueinander aufweisen.

2. Verfahren nach Anspruch 1,
**dadurch gekennzeichnet**, daß für eine Diagnose eines Anlagenzustands ein aus on-line erfaßten Meßwerten (MW) oder Meldesignalen (MS) generiertes Prozeßsignal (PSᵢ) vorgegeben wird.

3. Verfahren nach Anspruch 1,
**dadurch gekennzeichnet**, daß für eine Prognose eines Anlagenzustands ein simuliertes Prozeßsignal (PS_{i'}) vorgegeben wird.

4. Verfahren nach einem der Ansprüche 1 bis 3,
**dadurch gekennzeichnet**, daß die zeitliche und/oder logische Abfolge von Prozeßsignalen (PSᵢ) dargestellt wird.

5. Verfahren nach einem der Ansprüche 1 bis 4,
**dadurch gekennzeichnet**, daß eine Anzahl der Funktionseinheiten (FEi) als Informationselemente (Iᵢ(FEᵢ)) anhand ihrer Korrelationen untereinander und mit den Prozeßsignalen (PSᵢ) dargestellt werden.

6. Verfahren nach nach einem der Ansprüche 1 bis 5,
**dadurch gekennzeichnet**, daß zusätzlich Prozeßsignale (PSᵢ) miteinander verknüpfende Operatoren (Oᵢ) als Informationselemente (Iᵢ(Oᵢ)) dargestellt werden.

## Claims

1. Method for analysing process signals of a technical system, in particular a power station system, whose system process is subdivided into functional units (FEᵢ),
- in which method it is checked for each process signal (PSᵢ) and each functional unit (FEᵢ) whether this process signal (PSᵢ) is a component of this functional unit (FEᵢ),
- in which method the degree of correlation between in each case two process signals (PSᵢ) is determined with the aid of the number of those functional units (FEᵢ) in which they are jointly a component, and
- in which method, for a prescribed process signal (PSᵢ), the process signals (PSᵢ) correlated with it are represented as information elements (Iᵢ(PSᵢ)) , positioned relative to one another in such a way that the distance between in each case two information elements (Iᵢ(PSᵢ)) represents the degree of their correlation, the information elements (I; (PSᵢ)) representing the process signals (Psi) with the highest correlation having the smallest distance from one another.

2. Method according to Claim 1, characterized in that a process signal (PSᵢ) generated from values (MW) measured on-line event signals (MS) is prescribed for a diagnosis of a system state.

3. Method according to Claim 1, characterized in that a simulated process signal (PS_{i'}) is prescribed for a forecast of a system state.

4. Method according to one of Claims 1 to 3, characterized in that the temporal and/or logic sequence of process signals (PSᵢ) is represented.

5. Method according to one of Claims 1 to 4, characterized in that a number of the functional units (FEᵢ) are represented as information elements (Iᵢ (FEᵢ)) with the aid of their correlations with one another and with the process signals (PSᵢ).

6. Method according to one of Claims 1 to 5, characterized in that in addition process signals (PSᵢ) of operators (Oᵢ) combined with one another are represented as information elements (Iᵢ(Oᵢ)).

## Revendications

1. Procédé d'analyse de signaux de processus d'une installation technique, notamment d'une centrale électrique, dont le processus d'installation est décomposé en unités (FEᵢ) fonctionnelles,
- dans lequel on vérifie pour chaque signal (PSᵢ) de processus et pour chaque unité (FEᵢ) fonctionnelle, si ce signal (PSᵢ) de processus fait partie de cette unité (FEᵢ) fonctionnelle,
- dans lequel on détermine pour chaque groupe de deux signaux (PSᵢ) de processus le degré de leur corrélation à l'aide du nombre des unités (FEᵢ) fonctionnelles, dont ils font conjointement partie, et
- dans lequel on représente, pour un signal (PSᵢ) de processus prescrit, les signaux (PSᵢ) de processus qui y sont corrélés comme éléments (Iᵢ(PSᵢ)) d'information mis en position les uns par rapport aux autres de telle manière que la distance entre deux éléments (Iᵢ(PSᵢ)) d'information représentent le degré de leur corrélation, les éléments (I;(PSᵢ)) d'information représentant les signaux (PSᵢ) de processus les plus fortement correlés ayant la plus petite distance l'un par rapport à l'autre.

2. Procédé suivant la revendication 1,
caractérisé en ce que, pour un diagnostic d'un état de l'installation, on prescrit un signal (PSᵢ') de processus généré à partir de valeurs (MW) de mesure ou de signaux (MS) d'avertissement détectés en ligne.

3. Procédé suivant la revendication 1,
caractérisé en ce que, pour un pronostic d'un état de l'installation, on prescrit un signal (PS_{i'}) de processus simulé.

4. Procédé suivant l'une des revendications 1 à 3,
caractérisé en ce que l'on représente la succession dans le temps et/ou la succession logique de signaux (PSᵢ) de processus.

5. Procédé suivant l'une des revendications 1 à 4,
caractérisé en ce que l'on représente une pluralité d'unités (FEᵢ) fonctionnelles comme éléments (Iᵢ(FEᵢ)) d'information à l'aide de leurs corrélations entre elles et avec les signaux (PSᵢ) de processus.

6. Procédé suivant l'une des revendications 1 à 5,
caractérisé en ce que l'on représente en plus comme éléments (Iᵢ(Oᵢ)) d'information des opérateurs (Oᵢ) reliant entre eux des signaux (PSᵢ) de processus.
